# EUROPEAN PATENT SPECIFICATION

(11) **EP 2 426 859 B1**
(45) Date of publication and mention of the grant of the patent: **11.03.2015**
(21) Application number: 10769256.8
(22) Date of filing: 20.04.2010
(51) Int. Cl.: H04L 12/24, H04L 12/26, H04W 88/18, H04W 4/00, H04L 29/06, H04L 29/08

(54) **METHOD AND SERVER FOR TRANSFERRING LARGE OBJECT**
VERFAHREN UND SERVER ZUR VERSENDUNG GROSSER OBJEKTE
PROCÉDÉ ET SERVEUR POUR TRANSFÉRER UN GRAND OBJET

(30) Priority: 30.04.2009 CN 200910138535
(43) Date of publication of application: 07.03.2012
(73) Proprietor: ZTE Corporation, Shenzhen, Guangdong 518057 (CN)
(72) Inventor: CHEN, Bo, Guangdong 518057 (CN); JU, Fei, Guangdong 518057 (CN); YUAN, Lei, Guangdong 518057 (CN); ZHOU, Tao, Guangdong 518057 (CN); YANG, Hanling, Guangdong 518057 (CN); SHEN, Jian, Guangdong 518057 (CN)
(74) Representative: Jansen, Cornelis Marinus
(86) International application number: PCT/CN2010/071929
(87) International publication number: WO 2010/124567

(56) References cited:
- WO-A2-2006/017831
- CN-A- 101 114 933
- US-A- 5 452 299
- US-A1- 2006 149 703
- "DS Protocol ; OMA-TS-DS_Protocol-V2_0-20090212-C", OMA-TS-DS_PROTOCOL-V2_0-20090212-C, OPEN MOBILE ALLIANCE (OMA), 4330 LA JOLLA VILLAGE DR., SUITE 110 SAN DIEGO, CA 92122 ; USA , no. 2.0 12 February 2009 (2009-02-12), pages 1-99, XP064080956, Retrieved from the Internet: URL:ftp/Public_documents/DS/DS_2_0/Permane nt_documents/ [retrieved on 2011-07-06]
- "OMA Device Management Protocol", , 17 June 2008 (2008-06-17), pages 1-53, XP055044465, Retrieved from the Internet: URL:http://www.openmobilealliance.org/tech nical/release_program/docs/DM/V1_2_1-20080 617-A/OMA-TS-DM_Protocol-V1_2_1-20080617-A .pdf [retrieved on 2012-11-16]
- LAKSHMESHWAR S ET AL: "Suspend and Resume Feature for OMA DM Large Object Delivery", GRID AND PERVASIVE COMPUTING WORKSHOPS, 2008. GPC WORKSHOPS '08. THE 3RD INTERNATIONAL CONFERENCE ON, IEEE, PISCATAWAY, NJ, USA, 25 May 2008 (2008-05-25), pages 206-212, XP031270045, ISBN: 978-0-7695-3177-9

## Description

### Field of the Invention

The present invention relates to the communication field, in particular to a method for transmitting a large object used for an OMA SyncML protocol and a server.

### Background of the Invention

In the related art, an Open Mobile Alliance Device Management (OMA DM) service is a mobile data value-added service based on an OMA Synchronization Mark up Language (SyncML) DM related standard. The OMA DM service enables the operators to achieve the capacity of performing a remote management on a mobile terminal in a wireless manner. A Device Management (DM) client, which operates in a mobile phone, needs to perform interactions specified in the protocol with a server to realize the SyncML DM functions including functions such as device information management, parameter acquisition/configuration, terminal software/firmware upgrade, etc.

The OMA DM protocol is an application protocol affiliated to the OMA SyncML protocol. In the OMA DM protocol, a session realizes various device management functions via transmitting various commands and acquiring responses from the terminal. The commands supported by the OMA DM protocol, which are the subset of the OMA SyncML protocol, include: Get, Add, Replace, Exec (Execution), Delete, and so on.

The OMA SyncML protocol supports object transmission. When the size of the object is larger than a maximum number of message bytes of the terminal, the object can be referred to as a large object. That is, the size of the object is greater than the maximum message size (MaxMsgSize) supported by the terminal. For the transmission of the large object, the OMA SyncML protocol normally divides the large object into blocks for transmission, with the size of each block being smaller than or equal to the supported capacity of the terminal. After completing the transmission, the terminal combines all the blocks, and determines that whether the transmission is successful and complete based on the Size information provided during the transmission.

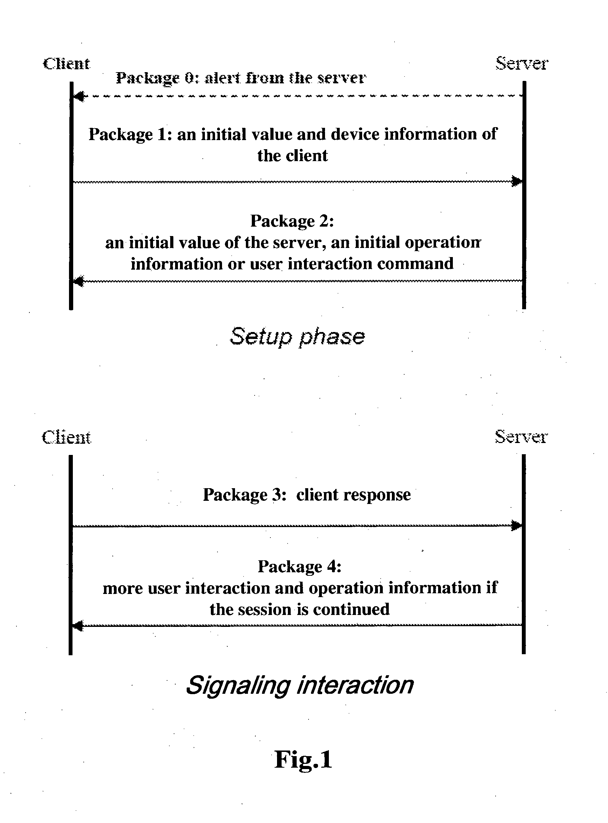

Figure 1 is a signaling flow chart of a device management session in the OMA DM protocol in the related art, in which the processing procedure is specified by the DM protocol, and the transmission of the large object occurs in a session period specified by the protocol. As shown in Fig 1, after a client reports a message Package 1, a server can transmit a large object transmission command in a response package (Package 2). Through the repetitive interactions of Package 3 and Package 4, the client and the server can complete the whole transmission procedure of the large object.

According to the commands supported by the protocol, the transmission of the large object can be achieved via two types of commands, i.e. Replace and Add. In the above, the Replace command needs to operate an existent leaf node in one terminal, and the replacement value have to meet the requirements on the value attribute of the leaf node; and the Add command must operate an inexistent node in one terminal. If the above conditions cannot be satisfied, then executions of the two commands will both return failures.

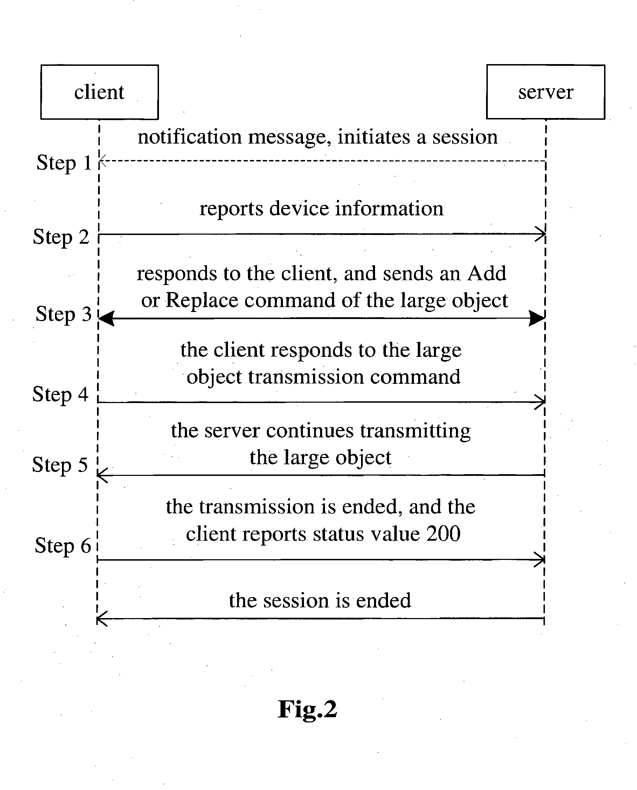

The following is an example of large object transmission performed via the Add command. Fig 2 is a signaling flow chart of the transmission of the large object in the prior art. As shown in Fig 2, the flow includes processing as follows.
1. The server sends a notification message to the client, and initiates a session.
2. After receiving the notification message, the client sends a first message (for reporting device information), in which the MaxMsgSize supported by the client being 3500 is reported to the server.
   <SyncML>
   <SyncHdr>
   <Meta>
      <MaxMsgSize>3500</MaxMsgSize>
      <MaxObjSize>524288</MaxObjSize>
   </Meta>
   </SyncHdr>
   <SyncBody> omitted...</SyncBody>
      </SyncML>
3. After receiving the report from the client, the server starts the transmission of the large object via the Add command. In the first Add command, it is provided that the Size of the large object is 4000. As the Size value exceeds the MaxMsgSize supported by the client, the server transmits the first 3500 bytes (it is proper that the size of each block being smaller than or equal to the supported capacity of the terminal), and informs the client, via <Moredata/>, that there are data which are not transmitted.
   <SyncML>
   <SyncHdr> omitted ...... </SyncHdr>
   <SyncBody>
   <Add>
      <CmdID>4</CmdID>
   <Meta>
      <Size xmlns="syncml:metinf">4000</Size>
         </Meta>
   <Target>
   <LocURI./Application/downloadtest</LocURI>
      </Target>
      <Data>#!"^!#mflrg#!^!# (transmission data) </Data>
      <MoreData />
   </Add>
   </SyncBody>
   </SyncML>
4. The client confirms the reception of the data, returns a status code 213, which indicates that the reception of the large object data is unfinished, and notifies the server to continue transmitting the data by transmitting an Alert 1222. If the execution of the client fails, then the server ends the flow.
   <SyncML>
   <SyncHdr> omitted······</SyncHdr>
   <SyncBody>
   <Status>
      <Cmd>Add</Cmd>
      <Data>213</Data>
      </Status>
   <Alert>
      <CmdID>3</CmdID>
      <Data> 1222</Data>
   </Alert>
   </SyncBody>
   </SyncML>
5. After receiving response from the client, the server continues to transmit the remaining fields until the transmission is finished (without a Moredata label).
   <SyncML>
   <SyncHdr> omitted······ </SyncHdr>
   <SyncBody>
   <Add>
   <Item>
   <Target>
      <LocURI>./Application/downloadtest</LocURI>
      </Target>
      <Data>#!^!#mflrg#!^!#</Data>
      </Item>
      </Add>
      <Final />
      </SyncBody>
      </SyncML>
6. After receiving the remaining data, the client checks whether the transmitted large object is complete according to the Size value sent in the first Add command, if the transmitted large object is complete and correct, then sends a 200 confirmation code back to the server, and the transmission session is completed.

It can be concluded from the above processing, when the server starts to perform the Add command operation of a large object, the server generally performs the transmission of the large object in the first Add command package based on the MaxMsgSize reported by the client. However, if the client can not receive the large object due to the existent node in the client or some other reasons, then the client may return a failure response to interrupt the transmission of the large object. At this point, however, the client has received the first package of the large object transmitted by the server, wherein the transmitted data volume in the first Add command is generally equal to the MaxMsgSize. Thus, the limited bandwidth resource of the client is wasted, as well as the processing capability. It is a considerable waste especially for the network resource of a low speed and low bandwidth network. In addition, although the operation on the large object via the Replace command aims at the existent node, the operation is possible to fail if the client space is insufficient or if package lost occurs during network transmission. Therefore, the limited bandwidth resource and the processing capability of the client will also be wasted.

It is noted that the publication entitled "DS Protocol; OMA-TS-DS_ Protocol-V2_0-20090213-C", DS Protocol; OMA-TS-DS_Protocol-V2_0-20090213-C", OPEN MOBILE ALLIANCE (OMA) specifies message flows between data synchronization client and server.

### Summary of the Invention

The present invention is provided considering the problem in the prior art that when the Add or Replace command in the OMA SyncML protocol fails, the resource of the client and the bandwidth of the network will be wasted. The present invention aims to provide a method for transmitting a large object and a server, so as to solve the above problem in the prior art.

In order to achieve the above object, there is provided a method, as disclosed in claim 1, for transmitting a large object according to one aspect of the present invention.

The method for transmitting a large object according to the present invention comprises: after a client or a server initiates a device management session, the server sending to the client a large object transmission command which carries large object transmission data, wherein a difference between the maximum number of message bytes (MAXMSGSIZE) supported by the client and the number of bytes of the large object transmission data is greater than or equal to a preset value; and the server receiving an execution result of the large object transmission command returned by the client, and executing subsequent large object transmission operations based on the execution result.

Preferably, before the step of the server sending the large object transmission command to the client, the method further comprises: the client notifying the server of the MAXMSGSIZE.

Preferably, step of the server executing subsequent large object transmission operations based on the execution result comprises: the server continuing sending remaining large object transmission data to the client based on the MAXMSGSIZE in the case that the execution result is that the client executes the large object transmission command successfully; and the server ending the device management session or sending other command to the client as required in the case that the execution result is that the client fails to execute the large object transmission command.

Preferably, the large object transmission command comprises one of the following: an Add command, and a Replace command.

Preferably, the number of bytes of the large object transmission data is 0.

In order to achieve the above object, there is provided a server, as disclosed in claim 6, according to another aspect of the present invention.

The server according to the present invention includes: a first sending module, configured to send to a client a large object transmission command which carries large object transmission data, wherein a difference between the maximum number of message bytes (MAXMSGSIZE) supported by the client and the number of bytes of the large object transmission data is greater than or equal to a preset value; a first receiving module, configured to receive an execution result of the large object transmission command returned by the client; and an executing module, configured to execute subsequent large object transmission operations based on the execution result.

Preferably, the server further comprises: a second receiving module, configured to receive the MAXMSGSIZE notified by the client.

Preferably, the executing module specifically comprises: a second sending module, configured to continue sending remaining large object transmission data to the client based on the MAXMSGSIZE in the case that the execution result is that the client executes the large object transmission command successfully; or, to send other command to the client as required in the case that the execution result is that the client fails to execute the large object transmission command; and a session ending module, configured to end a device management session in the case that the execution result is that the client fails to execute the large object transmission command.

Preferably, the large object transmission command comprises one of the following: an Add command, and a Replace command.

Preferably, the number of bytes of the large object transmission data is 0.

By means of the technical solution of the present invention, when it is failed to execute the Add (or the Replace) command to add a large object node, by carrying extremely few large object data in the first data package, it can solve the problem that the waste occurs to the client resource and network bandwidth due to the failure of the Add or Replace command in the OMA SyncML protocol in the prior art, increase the response speed when the Add command fails, and decrease the waste on the network resource and bandwidth so as to improve the user's experience. Moreover, the technical solution can substantially improve the resource utilization efficiency, especially in a low-speed network.

Other features and advantages of the present invention will be detailed in the following description, and partly become obvious from the description, or be understood by implementing the present invention. The objects and other advantages of the present invention can be realized and obtained through the structures indicated by the description, claims and drawings.

### Brief Description of the Drawings

Fig.1 is a signaling flow chart of a device management session of the OMA DM protocol in the related art;
Fig 2 is a signaling flow chart of the transmission of a large object in the related art;
Fig 3 is a flow chart of the method for transmitting a large object according to an embodiment of the present invention;
Fig 4 is a signaling flow chart of the detailed processing of the method for transmitting a large object according to an embodiment of the present invention; and
Fig 5 is a block diagram of the server according to an embodiment of the present invention.

### Detailed Description of the Embodiments

The technical solution of the present invention is illustrated below with reference to the drawings, which are used to providing a better understanding of the technical solution of the embodiments, and the present invention should not be limited to the forms illustrated in the drawings during implementation.

In the prior OMA DM protocol, the transmission of a large object is generally performed according to the MaxMsgSize value reported by the client, the first data package includes the command itself (an Add or Replace command) and the data with a size slightly smaller than the value of the MaxMsgSize. Therefore, when the Add or Replace command fails, it may cause the waste of the client resource and network bandwidth. In view of this, the present invention provides a method for optimizing transmission of a large object in an Add (or Replace) command in the OMA DM protocol. The method reduces the waste of the transmission resource and time when the Add (or Replace) fails by reducing data volume of the first package of the large object transmission in the Add (or Replace) command. It should be noted that the improvement for the way of large object transmission through the Add (or Replace) is mainly in the initialization phase of transmission procedure.

The preferred embodiments of the present invention are explained below in connection with the drawings, it should be understood that the preferred embodiments described herein are intended to illustrate and explain the present invention, rather than limit the scope of the present invention.

In the following description, for the purpose of explanation, a plurality of particular details are described in order to provide a thorough understanding of the present invention. However, it is apparent that the present invention can be realized without these particular details, in addition, the above embodiments and various details thereof can be combined without departing from the scope and the spirit defined in the claims.

### Method Embodiments

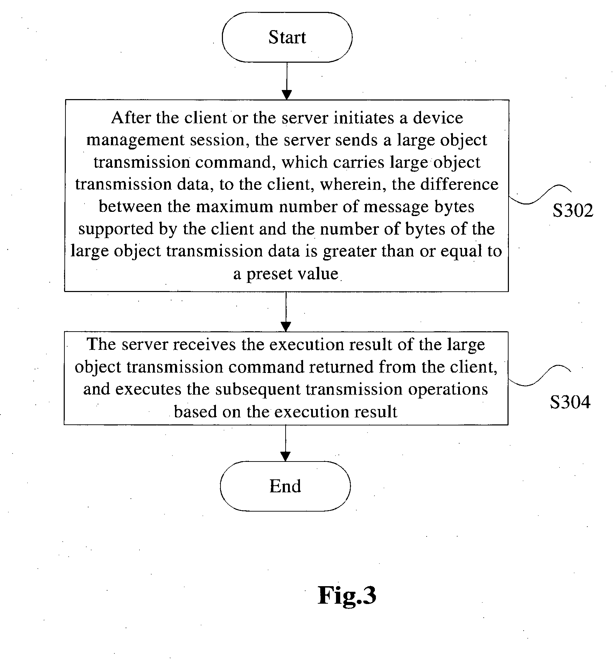

There is provided a method for transmitting a large object used in the OMA SyncML protocol according to an embodiment of the present invention. Fig 3 is a flow chart of the method for transmitting a large object according to the embodiment of the present invention, as shown in Fig 3, the method includes processes as follows (step S302-step S304).

Step S302: after a client or a server initiates a DM session, the server sends to the client a large object transmission command (including: an Add command, or a Replace command) which carries large object transmission data, wherein the difference between the maximum number of message bytes (MAXMSGSIZE) supported by the client and the number of bytes of the large object transmission data is greater than or equal to a preset value. It is to be noted that the preset value can be set depending on actual situations. There are other data needing to be transmitted besides the large object transmission data in the large object transmission command, thus the preset value must be at least greater than the number of bytes of the data needing to be transmitted other than the large object transmission data in the Add command or the Replace command. On the other hand, the large object transmission data carried in the large object transmission command can be slightly different depending on actual situations, for example, the large object transmission data can be 20 bytes or any other number of bytes much less than the MAXMSGSIZE value. Preferably, the number of bytes of the large object transmission data can be 0, that is, no large object transmission data is transmitted.

Before the server transmits the large object transmission command to the client, the client notifies the server of the maximum number of the message bytes.

S304: the server receives an execution result of the large object transmission command returned by the client, and executes the subsequent large object transmission operations based on the execution result.

Specifically, in the case that the execution result is that the client executes the large object transmission command successfully, the server continues transmitting remaining large object transmission data to the client based on the maximum number of message bytes (consistent with the large object transmission manner of the prior art); and in the case that the execution result is that the client fails to execute the large object transmission command, the server can end the device management session, or transmit other command to the client as required.

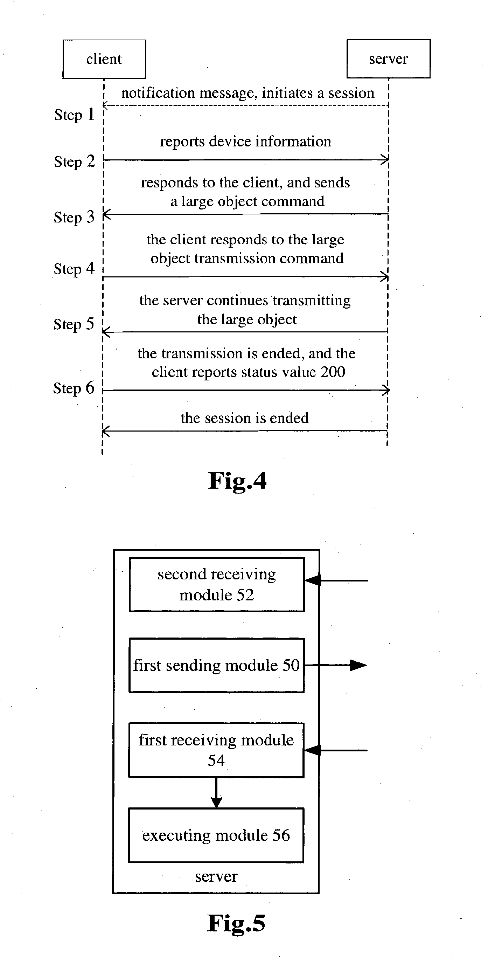

The above-mentioned technical solution of the embodiment of the present invention will be illustrated in detail in conjunction with the drawings. Fig 4 is a signaling flow chart of the detailed processing of the method for transmitting a large object according to the embodiment of the present invention, and as shown in Fig 4, the method includes processing as follows.

Step 1: the client or the server triggers a DM session, in the case that the server triggers the DM session actively, the server sends a notification (Notification) message to the client, and starts the DM session.

Step 2: the client sends Package 1 specified by the protocol, and reports the status of the client. In the Package 1, the client will include a MAXMSGSIZE field to inform the server of the maximum message size supported by the client. The message is shown as follows, in which the specific numerical value is just an example, and the MAXMSGSIZE is relative with the supported capability of the client having the session and a prescribed value:

```
   <Meta>
       <MaxMsgSize>3500</MaxMsgSize>
       <MaxObjSize>524288</MaxObjSize>
   </Meta>
```

Step 3: the server responds to the Package 1 of the client via the Package 2, and sends a large object transmission command via an Add or Replace command. In the above, the data volume (size) of the large object carried in the large object transmission command is extremely small, and the data is not transmitted as many as possible based on the value of the MaxMsgSize, even in an extreme condition, the data volume sent herein can be specified as 0.

While in the process shown in Fig 2, in the processing of large object transmission in the related art, the Package 2 may carry a large volume of data, which makes the size of the whole message package approximate to or equal to the MAXMSGSIZE value.

It should be noted that the session flow herein only represents a session procedure in which the transmission of the large object is initiated directly, and actually, the server may not send the large object transmission command in the Package 2, but carry the large object transmission command during a certain subsequent sending. Therefore, the present invention is only directed to the large object transmission procedure itself, and does not need to define when to initiate the transmission of the large object.

Step 4: the client responds to the large object command, if the client fails to execute the command, then the server can send other command as required or end the session procedure directly. If the client executes the command successfully, then the client instructs the server to continue sending other large object transmission data through a returning value of 213, and performs Step 5.

Specifically, in the case that the client fails to execute the command, the data volume sent from the server to the client is not large, which will not cause the waste of the network resource and time resource. The client can inform the server of the failure result rapidly so that the server can determine whether to resend (or execute other command, end the session, etc. ), rather than wait for the completion of the transmission of the large amount of data to inform the server of the execution failure message.

Step 5: the server continues the transmission of the large object data, which is consistent with the general large object transmission procedure, that is, packeting is performed according to the specification of MAXMSGSIZE.

Step 6: the server and the client continue the transmission of the large object, and the client reports the status code representing successful completion upon the completion of the transmission, and the server ends the session.

Through the above processing, the response speed during the failure of the command can be increased, the waste of the network bandwidth and resource can be reduced, and the user's experience can be improved. The above processing can substantially improve the resource utilization efficiency, especially in a low-speed network.

### Device Embodiments

There is provided a server according to an embodiment of the present invention. Fig 5 is a block diagram of a server according to the embodiment of the present invention, and as shown in Fig 5, the server according to the embodiment of the present invention includes: a first sending module 50, a second receiving module 52, a first receiving module 54, and an executing module 56. The server according to the embodiment of the present invention will be described in detail as follows.

Specifically, firstly, after a DM session is initiated, the second receiving module 52 of the server receives the maximum number of message bytes sent by the client, subsequently, the first sending module 50 sends a large object transmission command (including: an Add command, or a Replace command), which carries large object transmission data, to the client, wherein the difference between the maximum number of message bytes (MAXMSGSIZE) supported by the client and the number of bytes of the large object transmission data is greater than or equal to a preset value. It should be noted that the preset value may be set depending on actual situations. Because there are other data needing to be transmitted besides the large object transmission data in the large object transmission command, the preset value must be at least greater than the number of bytes of the data needing to be transmitted other than the large object transmission data in the Add command or the Replace command. On the other hand, the large object transmission data carried in the large object transmission command can be slightly different depending on actual situations, for example, the large object transmission data can be 20 bytes or any other number of bytes much less than the MAXMSGSIZE value. Preferably, the number of bytes of the large object transmission data can be 0, that is, no large object transmission data is transmitted.

The first receiving module 54 is used to receive an execution result of the large object transmission command returned by the client. After the first receiving module 54 receives the execution result returned by the client, the executing module 56 can execute the subsequent large object transmission operations based on the execution result.

Specifically, the executing module 56 can include: a second sending module, for continuing transmitting remaining large object transmission data to the client according to the maximum number of message bytes, in the case that the execution result is that the client executes the large object transmission command successfully (consistent with the large object transmission manner of the prior art), or, for transmitting other command to the client as required in the case that the execution result is that the client fails to execute the large object transmission command; and a session ending module, for ending a device management session in the case that the execution result is that the client fails to execute the large object transmission command.

It should be noted that various alterations and combination can be made to the above-mentioned modules without departing from the scope and spirit defined in the attached claims.

In summary, by means of the technical solution of the present invention, when it is failed to execute the Add (or the Replace) command to add a large object node, by carrying extremely few large object data in the first data package, it can solve the problem that the waste occurs to the client resource and network bandwidth due to the failure of the Add or Replace command in the OMA SyncML protocol in the prior art, increase the response speed when the Add command fails, and decrease the waste on the network resource and bandwidth so as to improve the user's experience. Moreover, the technical solution can substantially improve the resource utilization efficiency, especially in a low-speed network.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all included in the scope of the protection of the present invention.

## Claims

1. A method for transmitting a large object, **characterized in that** after a client or a server initiates a device management session, the method comprises:
the server sending to the client a large object transmission command which carries large object transmission data, wherein a difference between the maximum number of message bytes, MAXMSGSIZE, supported by the client for the transmission of large objects and the number of bytes of the large object transmission data is greater than or equal to a preset value; and
the server receiving an execution result of the large object transmission command returned by the client, and executing subsequent large object transmission operations based on the execution result.

2. The method according to Claim 1, **characterized in that** before the step of the server sending the large object transmission command to the client, the method further comprises:
the client notifying the server of the MAXMSGSIZE.

3. The method according to Claim 2, **characterized in that** the step of the server executing subsequent large object transmission operations based on the execution result comprises:
the server continuing sending remaining large object transmission data to the client based on the MAXMSGSIZE in the case that the execution result is that the client executes the large object transmission command successfully; and
the server ending the device management session or sending other command to the client as required in the case that the execution result is that the client fails to execute the large object transmission command.

4. The method according to any one of the Claims 1 to 3, **characterized in that** the large object transmission command comprises one of the following: an Add command, and a Replace command.

5. The method according to any one of the Claims 1 to 3, **characterized in that** the number of bytes of the large object transmission data is 0.

6. A server, **characterized by** comprising:
a first sending module, configured to send to a client a large object transmission command which carries large object transmission data, wherein a difference between the maximum number of message bytes, MAXMSGSIZE, supported by the client for the transmission of large objects and the number of bytes of the large object transmission data is greater than or equal to a preset value
a first receiving module, configured to receive an execution result of the large object transmission command returned by the client; and
an executing module, configured to execute subsequent large object transmission operations based on the execution result.

7. The server according to Claim 6, **characterized in that** the server further comprises:
a second receiving module, configured to receive the MAXMSGSIZE notified by the client.

8. The server according to Claim 6, **characterized in that** the executing module comprises:
a second sending module, configured to continue sending remaining large object transmission data to the client based on the MAXMSGSIZE in the case that the execution result is that the client executes the large object transmission command successfully; or, to send other command to the client as required in the case that the execution result is that the client fails to execute the large object transmission command; and
a session ending module, configured to end a device management session in the case that the execution result is that the client fails to execute the large object transmission command.

9. The server according to any one of the Claims 6 to 8, **characterized in that** the large object transmission command comprises one of the following: an Add command, and a Replace command.

10. The server according to any one of the Claims 6 to 8, **characterized in that** the number of bytes of the large object transmission data is 0.

## Patentansprüche

1. Verfahren zur Versendung eines großen Objekts, **dadurch gekennzeichnet, dass**, nachdem ein Client oder ein Server eine Geräteverwaltungssitzung auslöst, das Verfahren umfasst, dass:
der Server an den Client einen Versendungsbefehl, der Versendungsdaten für ein großes Objekt enthält, für ein großes Objekt sendet, wobei eine Differenz zwischen der vom Client für die Versendung großer Objekte unterstützten Höchstanzahl an Nachrichten-Bytes, MAXMSGSIZE, und der Anzahl von Bytes der Versendungsdaten des großen Objekts größer oder gleich einem voreingestellten Wert ist; und
der Server ein vom Client zurückgegebenes Ausführungsergebnis der Versendung des großen Objekts empfängt und dann basierend auf dem Ausführungsergebnis die Vorgänge für die Versendung des großen Objekts ausführt.

2. Verfahren nach Anspruch 1, **dadurch gekennzeichnet, dass** vor dem Schritt, in dem der Server den Befehl für die Versendung des großen Objekts an den Client sendet, das Verfahren ferner umfasst, dass:
der Client den Server bezüglich der MAXMSGSIZE informiert.

3. Verfahren nach Anspruch 2, **dadurch gekennzeichnet, dass** der Schritt, in dem der Server dann die Vorgänge für die Versendung des großen Objekts basierend auf dem Ausführungsergebnis ausführt, umfasst, dass:
der Server fortfährt, basierend auf der MAXMSGSIZE, restliche Versendungsdaten des großen Objekts an den Client zu senden, falls das Ausführungsergebnis so ist, dass der Client den Versendungsbefehl für das große Objekt erfolgreich ausführt; und
der Server die Geräteverwaltungssitzung beendet oder gegebenenfalls einen anderen Befehl an den Client sendet, falls das Ausführungsergebnis so ist, dass die Ausführung des Versendungsbefehls für das große Objekt durch den Client fehlschlägt.

4. Verfahren nach einem der Ansprüche 1 bis 3, **dadurch gekennzeichnet, dass** der Versendungsbefehl für das große Objekt eines der Folgenden umfasst: einen Hinzufügungsbefehl und einen Ersetzungsbefehl.

5. Verfahren nach einem der Ansprüche 1 bis 3, **dadurch gekennzeichnet, dass** die Anzahl der Bytes der Versendungsdaten des großen Objekts 0 ist.

6. Server, **dadurch gekennzeichnet, dass** er Folgendes umfasst:
ein erstes Sendemodul, konfiguriert, um an einen Client einen Versendungsbefehl für ein großes Objekt zu senden, der Versendungsdaten für ein großes Objekt trägt, wobei eine Differenz zwischen der vom Client für die Versendung großer Objekte unterstützten Höchstanzahl an Nachrichten-Bytes, MAXMSGSIZE, und der Anzahl von Bytes der Versendungsdaten des großen Objekts größer oder gleich einem voreingestellten Wert ist;
ein erstes Empfangsmodul, konfiguriert, um ein vom Client zurückgegebenes Ausführungsergebnis des Versendungsbefehls für das große Objekt zu empfangen; und
ein Ausführungsmodul, konfiguriert, um dann basierend auf dem Ausführungsergebnis die Vorgänge für die Versendung des großen Objekts auszuführen.

7. Server nach Anspruch 6, **dadurch gekennzeichnet, dass** der Server ferner umfasst:
ein zweites Empfangsmodul, konfiguriert zum Empfangen der vom Client mitgeteilten MAXMSGSIZE.

8. Server nach Anspruch 6, **dadurch gekennzeichnet, dass** das Ausführungsmodul Folgendes umfasst:
ein zweites Sendemodul, konfiguriert, um fortzufahren, basierend auf der MAXMSGSIZE, restliche Versendungsdaten des großen Objekts an den Client zu senden, falls das Ausführungsergebnis so ist, dass der Client den Versendungsbefehl für das große Objekt erfolgreich ausführt; oder gegebenenfalls einen anderen Befehl an den Client zu senden, falls das Ausführungsergebnis so ist, dass die Ausführung des Versendungsbefehls für das große Objekt durch den Client fehlschlägt; und
ein Sitzungsbeendungsmodul, konfiguriert, um eine Geräteverwaltungssitzung zu beenden, falls das Ausführungsergebnis so ist, dass die Ausführung des Versendungsbefehls für das große Objekt durch den Client fehlschlägt.

9. Server nach einem der Ansprüche 6 bis 8, **dadurch gekennzeichnet, dass** der Versendungsbefehl für das große Objekt eines der Folgenden umfasst: einen Hinzufügungsbefehl und einen Ersetzungsbefehl.

10. Server nach einem der Ansprüche 6 bis 8, **dadurch gekennzeichnet, dass** die Anzahl der Bytes der Versendungsdaten des großen Objekts 0 ist.

## Revendications

1. Procédé de transmission d'un grand objet, **caractérisé en ce que**, après qu'un client ou un serveur initie une session de gestion de dispositif, le procédé comprend les étapes ci-dessous dans lesquelles :
le serveur envoie au client une commande de transmission de grands objets qui transporte des données de transmission de grands objets, dans lequel une différence entre le nombre maximum d'octets de message, MAXMSGSIZE, pris en charge par le client pour la transmission de grands objets, et le nombre d'octets des données de transmission de grands objets, est supérieure ou égale à une valeur prédéfinie ; et
le serveur reçoit un résultat d'exécution de la commande de transmission de grands objets, renvoyé par le client, et exécute des opérations de transmission de grands objets subséquentes sur la base du résultat d'exécution.

2. Procédé selon la revendication 1, **caractérisé en ce que**, avant l'étape dans laquelle le serveur envoie la commande de transmission de grands objets au client, le procédé comprend en outre l'étape ci-dessous dans laquelle :
le client notifie au serveur le nombre MAXMSGSIZE.

3. Procédé selon la revendication 2, **caractérisé en ce que** l'étape dans laquelle le serveur exécute des opérations de transmission de grands objets subséquentes sur la base du résultat d'exécution comprend les étapes ci-dessous dans lesquelles :
le serveur poursuit l'envoi de données de transmission de grands objets restantes au client sur la base du nombre MAXMSGSIZE, dans le cas où le résultat d'exécution indique que le client exécute la commande de transmission de grands objets avec succès ; et
le serveur interrompt la session de gestion de dispositif, ou envoie une autre commande au client tel que requis dans le cas où le résultat d'exécution indique que le client ne parvient pas à exécuter la commande de transmission de grands objets.

4. Procédé selon l'une quelconque des revendications 1 à 3, **caractérisé en ce que** la commande de transmission de grands objets comprend l'une des commandes suivantes : une commande d'ajout « Add », et une commande de remplacement « Replace ».

5. Procédé selon l'une quelconque des revendications 1 à 3, **caractérisé en ce que** le nombre d'octets des données de transmission de grands objets est égal à 0.

6. Serveur, **caractérisé en ce qu'**il comprend :
un premier module d'envoi, configuré de manière à envoyer, à un client, une commande de transmission de grands objets qui transporte des données de transmission de grands objets, dans lequel une différence entre le nombre maximum d'octets de message, MAXMSGSIZE, pris en charge par le client pour la transmission de grands objets, et le nombre d'octets des données de transmission de grands objets, est supérieure ou égale à une valeur prédéfinie ; et
un premier module de réception, configuré de manière à recevoir un résultat d'exécution de la commande de transmission de grands objets, renvoyé par le client ; et
un module d'exécution, configuré de manière à exécuter des opérations de transmission de grands objets subséquentes sur la base du résultat d'exécution.

7. Serveur selon la revendication 6, **caractérisé en ce que** le serveur comprend en outre :
un second module de réception, configuré de manière à recevoir le nombre MAXMSGSIZE notifié par le client.

8. Serveur selon la revendication 6, **caractérisé en ce que** le module d'exécution comprend :
un second module d'envoi, configuré de manière à poursuivre l'envoi de données de transmission de grands objets restantes au client, sur la base du nombre MAXMSGSIZE, dans le cas où le résultat d'exécution indique que le client exécute la commande de transmission de grands objets avec succès ; ou à envoyer une autre commande au client tel que requis dans le cas où le résultat d'exécution indique que le client ne parvient pas à exécuter la commande de transmission de grands objets ; et
un module d'interruption de session, configuré de manière à interrompre une session de gestion de dispositif dans le cas où le résultat d'exécution indique que le client ne parvient pas à exécuter la commande de transmission de grands objets.

9. Serveur selon l'une quelconque des revendications 6 à 8, **caractérisé en ce que** la commande de transmission de grands objets comprend l'une des commandes suivantes : une commande d'ajout « Add », et une commande de remplacement « Replace ».

10. Serveur selon l'une quelconque des revendications 6 à 8, **caractérisé en ce que** le nombre d'octets des données de transmission de grands objets est égal à 0.
